# EUROPÄISCHE PATENTANMELDUNG

(11) **EP 4 050 362 A1**
(43) Veröffentlichungstag der Anmeldung: **31.08.2022**
(21) Anmeldenummer: 22158989.8
(22) Anmeldetag: 25.02.2022
(51) Int. Cl.: G01S 5/16, G01S 1/70

(54) **VERFAHREN ZUR POSITIONSBESTIMMUNG EINES MOBILEN EMPFÄNGERS INNERHALB EINES GEBÄUDES ODER EINER ORTSFESTEN EINRICHTUNG**

(30) Priorität: 25.02.2021 DE 102021104579
(71) Anmelder: J.D. Geck GmbH, 58762 Altena (DE)
(72) Erfinder: Bothe, Max, 58285 Gevelsberg (DE); Renzing, Florian, 58636 Iserlohn (DE)
(74) Vertreter: Tarvenkorn, Oliver

(57) **Zusammenfassung**

Zur Positionsbestimmung eines mobilen Empfängers (10) innerhalb eines Gebäudes (1) sind mehrerer Sender (21, 22, 23) darin verteilt angeordnet, welche jeweils eine feste Position in einem ortsfesten Koordinatensystem besitzen. Sender strahlen jeweils ein optisches Signal (31, 32, 33) mit einer individuellen Senderkennung ab. In einem Speicher sind die Positionsdaten der Sender (21, 22, 23) hinterlegt. Der Empfänger (10) besitzt eine Empfangseinheit und ist mit einer Auswertungseinheit zur Auswertung des Inhalts und der Signalstärke eines empfangenen Signals (31, 32, 33) verbunden.

Im Empfänger (10) wird für jedes empfangene Signal (31, 32, 33) jeweils der abstrahlende Sender (21, 22, 23) ermittelt und dessen Positionsdaten werden aus dem Speicher abgerufen. Aus der Signalstärke des Signals (31, 32, 33) wird ein Abstandswert für den Abstand zwischen dem Empfänger (10) und dem abstrahlenden Sender (21, 22, 23) ermittelt. Aus Positionsdaten und Abstandswerten von mehreren Signalen (31, 32, 33), die von unterschiedlichen Sendern (21, 22, 23) abgestrahlt werden, wird mittels eines Tri- oder Multilaterationsverfahrens die Position des Empfängers (10) innerhalb des Gebäudes (31, 32, 33) berechnet.

Dabei sind die Signalstärken für die Abstrahlung des Signals (31, 32, 33) bei allen Sendern (21, 22, 23) der Gruppe normiert oder die individuelle Signalstärke jedes Senders (21, 22, 23) ist zusätzlich zu seinen Positionsdaten in dem Speicher hinterlegt. Die Abstrahlung der Signale (31, 32, 33) erfolgt bei jedem Sender (21, 22, 23) mit einer individuellen und nicht extern koordinierten Wiederholrate, die bei den Sendern (21, 22, 23) innerhalb der Gruppe unterschiedlich ist und/oder die bei den Sendern (21, 22, 23) vor jeder Ausstrahlung zufällig bestimmt wird.

## Beschreibung

Die Erfindung betrifft ein Verfahren zur Positionsbestimmung eines mobilen Empfängers innerhalb eines Gebäudes oder einer ortsfesten Einrichtung mit den Merkmalen des Oberbegriffs des Anspruchs 1.

Um Kunden in Verkaufsstätten zielgerichtete Angebote oder Orientierungshilfen geben zu können, ist der Einsatz sogenannter Beacons bekannt. Dabei handelt es sich um ortsfest installierte Sender, die beispielweise an einem Regal montiert sind und die über Bluetooth-Funk oder Infrarotsignale mit einem Empfänger, der an einem Einkaufswagen angebracht ist, kommunizieren, so dass beispielsweise auf einem Display an dem Einkaufswagen eine bestimmte Werbebotschaft eingeblendet wird. Damit kann dem Kunden aber zum einen keine wirksame Orientierungshilfe gegeben werden. Zum anderen wird der Kunde bei der Aufstellung vieler Beacons mit Botschaften überhäuft, so dass diese keinen Kaufanreiz bewirken, sondern eher nachteilig wirken. Eventuell werden sogar im schnellen Vorbeigehen Informationen mehrerer Beacons hintereinander empfangen, die dann ohne Zusammenhang zu dem Warenangebot in der Nähe des Kunden präsentiert werden.

Für eine gezielte Ausgabe von Werbebotschaften ist es somit wünschenswert, die Anzeige von der Position des Einkaufswagens abhängig zu machen. Der Kunde soll also beispielsweise nur dann eine besondere Anzeige sehen, wenn er eine Zeit lang im Bereich eines bestimmten Warensortiments verweilt.

Zur Positionsbestimmung innerhalb von Gebäuden scheidet der Einsatz von bekannten Techniken zur Satellitennavigation aus.

In der EP 3208630 B1 ist ein System zur Positionsbestimmung eines elektronischen Etikettes beschrieben. Dazu sind mehrere ortsfeste Sender vorgesehen, die zugleich auch Empfängereinheiten enthalten. Diese sind über eine Zentraleinheit miteinander vernetzt. In dem System werden Signale in Form von Lichtsignalen abgestrahlt. Dabei werden von den ortsfesten Sendern lediglich Triggersignale ausgesandt, um einen Sendevorgang bei einer mobilen Einheit auszulösen. Deren Signale werden von den ortsfesten Empfängereinheiten empfangen. Die Signalstärke wird beim Empfang in die Auswertung einbezogen, um so über ein Trilateralverfahren die Position der sendenden mobilen Einheit bestimmen zu können. Der Nachteil besteht darin, dass die ortsfesten Sende- und Empfangseinheiten miteinander über eine Zentraleinheit vernetzt sein müssen. Hierzu ist u.a. ein hoher Installationsaufwand erforderlich. Außerdem ist das bekannte System aus datenschutzrechtlichen Gründen möglicherweise nicht auf die Positionsbestimmung eines Einkaufswagens übertragbar, da in der Zentraleinheit der gesamte Weg des Kunden jederzeit nachvollziehbar ist.

Die Aufgabe der Erfindung besteht somit darin, ein kostengünstiges und mit geringem Aufwand in einem Gebäude installierbares Positionsbestimmungssystem für eine mobile Empfängereinheit anzugeben, das insbesondere für die Positionsbestimmung eines Einkaufswagens in einer Verkaufsstätte geeignet ist.

Diese Aufgabe wird durch ein Verfahren zur Positionsbestimmung eines mobilen Empfängers innerhalb eines Gebäudes oder einer ortsfesten Einrichtung mit den Merkmalen des Anspruchs 1 gelöst.

Nach der Erfindung wird die Position der mobilen Einheit nicht notwendigerweise über eine Zentraleinheit anhand von Signalen bestimmt, die die mobile Einheit absendet, sondern die Position wird umgekehrt nur aus Signalen ortsfester Sender ermittelt, welche vom mobilen Empfänger empfangen wurden.

Ein besonderer Vorteil der Erfindung liegt darin, dass das übertragene Datensignal lediglich eine sehr einfache Kennung enthalten muss, welches die Identifikation der jeweils sendenden Sendeeinheit ermöglicht. Die Kennung kann eine einfache Ganzzahl sein, beispielsweise ein 8-bit Integer-Wert, über den bis zu 256 Sender identifizierbar sind, oder ein 10-bit-Wert für bis zu 1024 Sender.

Sind die Sender in einem regelmäßigen Raster angeordnet, so dass zwischen ihnen konstante Abstände bestehen, können auch zwei Werte pro Datensignal übermittelt werden, um den Sender in einem kartesischen Koordinatensystem z. B. über einen Zeilen- und einen Spaltenwert zu identifizieren und über die bekannten Rasterdaten die Lage zu berechnen.

Das zu sendende Signal ist in jedem Fall sehr kurz und wird optisch übertragen. Das Senden der Daten per Licht bezieht sich insbesondere auf Infrarot- und Near-Infrared-Wellenlängen.

Durch die meist mögliche erhöhte Anbringung der Sender im Bereich der Geschossdecke bestehen in ausreichender Häufigkeit direkte Sichtverbindungen von einem Empfänger zu mehreren Sendern oder zumindest Empfangsmöglichkeiten durch Lichtstreuung im Raum. Im Vergleich zu einer funkbasierten Datenübermittlung besteht der Vorteil in einer geringeren Störanfälligkeit als in den von vielen Geräten bereits genutzten Funkfrequenzen im Ultra-Breitband-Bereich. Außerdem erfolgt die Datenübermittlung per Licht bei den kurzen Distanzen in Gebäuden praktisch ohne jede Verzögerung durch eine Signallaufzeit.

Für einen Einsatz des Verfahrens im Einzelhandel ist die Verwendung von Infrarotlicht bzw. Licht aus dem Near-Infrared-Spektrum eine sinnvolle Lösung, die flexibel und ohne großen Mehraufwand verbaut werden kann. Dadurch werden auch bereits vorhandene Lichtkonzepte der Läden nicht beeinflusst, sodass das Nachrüsten des Systems unproblematisch ist.

Es hat sich gezeigt, dass bei Anbringung der Sender in einer Verkaufsstätte in 5m Höhe eine Senderdichte von etwa 1 Sender pro 10m² vorgesehen sein sollte, damit unter Berücksichtigung der Verschattungen durch die üblichen Ladeneinrichtungen jeder Empfänger gleichzeitig Sicht auf wenigstens drei Sender hat.

Zur Datenübertragung ist eine Frequenzmodulation bevorzugt. Diese bietet zu den bekannten Vorteilen bei der Übertragung von Daten über Licht, neben der konstanten Amplitude, weitere Vorteile in Hinblick auf die Messung der Intensität.

Das Datensignal wird an jedem Sender in zufälligen Zeitintervallen abgestrahlt. Dabei sind die Sender nach der Erfindung nicht notwendigerweise miteinander verbunden oder sonstwie untereinander koordiniert. Da für den beschriebenen Anwendungsfall keine besondere Genauigkeit oder Ausfallsicherheit der Positionsbestimmung erforderlich ist, können Datensignale, die zufällig gleichzeitig von mehreren Sendern abgestrahlt werden, vom Empfänger einfach ignoriert werden. Der Empfänger wertet dann die nächstfolgenden, vollständig empfangenen Datensignale aus.

Die Sender strahlen ihre eigene Position in Bezug auf das Gebäude nicht direkt aus, um das zu übermittelnde Signal kurz zu halten. Da sie ortsfest angebracht sind und sie ihre Lage nicht oder nur selten verändern, können die Senderstandorte in Form einer sogenannten Floormap in einem Speicher des Empfängers oder einer nachgeschalteten Auswertungseinheit hinterlegt werden. Dabei handelt es sich um einen Datenspeicher, in dem jeweils einer Senderkennung die Ortsdaten des Senders in Bezug auf ein beliebiges Koordinatensystem, das für alle Sender gilt, hinterlegt sind. Die dem Empfänger nachgeschaltete Datenverarbeitungseinrichtung wertet also das Datensignal hinsichtlich der Senderkennung aus und greift über diese auf die Ortsdaten des Senders zu.

Dieser Vorgang wird für vorzugsweise drei von unterschiedlichen Sendern empfangene Datensignale durchgeführt bzw. wiederholt. Eine nachfolgende Aktualisierung des Empfängerstandorts kann möglicherweise auch anhand von nur zwei ausgewerteten Datensignalen vorgenommen werden, insbesondere dann, wenn aus den zusätzlich zu den Datensignalen ermittelten Abstandswerten hervorgeht, dass der Überlappungsbereich zweier Sender relativ klein ist.

Die Abstandswerte fließen rechnerisch als Radius um den ortsfesten Senderstandort ein. Praktisch werden die Abstandswerte nach der Erfindung jeweils aus der Signalstärke des empfangenen Datensignals ermittelt.

Da die Daten als Lichtsignale ausgestrahlt werden, ist es möglich, einen Abstandswert aus der Lichtintensität unter Nutzung des photometrischen Entfernungsgesetzes, auch als Abstandsgesetz bezeichnet, abzuleiten. Das Entfernungsgesetz beschreibt das Verhalten der Lichtstärke in Abhängigkeit von der Entfernung zur Quelle.

Zusätzlich wird die Eigenschaft der Lichtverteilung von lichttechnischen Bauteilen genutzt. Eine Lichtverteilungskurve (LVK) beschreibt das Verhalten der Lichtstärke in Abhängigkeit des Horizontalwinkels (Azimut) und/oder Vertikalwinkels (Elevation), unter dem bzw. denen das Licht das Bauteil verlässt. Damit hat sie zusätzlichen Einfluss auf die Intensität in Abhängigkeit von der Position zur Quelle. Gleiches Verhalten weisen lichtempfindliche Bauteile auf, die Licht detektieren.

Werden die mehreren höhenabhängigen Lichtverteilungskurven des Gesamtsystems bei der Signalauswertung beim Empfänger und/oder bei der Positionsbestimmung mitberücksichtigt, können die Sender auch auf unterschiedlichen Höhen angeordnet sein. Ansonsten muss eine einheitliche Senderhöhe über dem Standort des Empfängers gegeben sein.

Um eine Normierung der Signalstärken bei allen Sendern bzw. zumindest innerhalb einer Gruppe von Sendern zu erreichen, werden die Sender der Gruppe entweder vorab durch Hardwareeingriffe auf eine einheitliche Signalsendestärke gebracht oder es wird für jeden Sender vor Inbetriebnahme des Positionsbestimmungssystems ein Korrekturfaktor ermittelt, der in der Floormap zusätzlich zu den Ortsdaten des Senders hinterlegt wird.

Sobald beim Empfänger drei Datensignale vollständig empfangen worden sind und die jeweiligen Signalstärken bzw. Abstandswerte dabei bestimmt worden sind, kann in der Datenverarbeitungseinrichtung der Standort des Empfängers durch ein Trilaterationsverfahren berechnet werden.

Mit Kenntnis der Position des Empfängers können dann weitere Aktionen ausgelöst werden wie z. B. die Anzeige von Navigationshilfen für den Benutzer oder die Anzeige gezielter Werbebotschaften, die sich auf den unmittelbaren Nahbereich bei, Empfänger beziehen. Die Auslösung der Aktionen kann davon abhängig gemacht werden, ob es eine bestimmte Verweildauer des Empfängers in der Region gibt. Bei zu schnellen Positionsänderungen pro Zeiteinheit, wenn also der Benutzer beispielsweise von einem entlegenen Bereich der Verkaufsstätte zum Kassenbereich eilt, wird auf die Anzeige von Werbetexten verzichtet. Andererseits kann währenddessen durch eine Pfeildarstellung der Weg zum Kassenbereich gewiesen werden. Umgekehrt wird bei ruhendem Empfänger, als stehendem Einkaufswagen, keine Navigationshilfe angezeigt.

Durch die Auswertung von drei und mehr Datensignalen unterschiedlicher Sender wird im Regelfall eine ausreichende Genauigkeit für die Positionsbestimmung bei einem im Gebäude befindlichen Empfänger erzielt.

In sehr großen Gebäuden oder in Außenbereichen, wo weniger Sender installiert sind und möglicherweise nicht gewährleistet werden kann, dass ständig wenigstens drei Datensignale zu empfangen sind, kann die Genauigkeit der Positionsbestimmung vor allem durch Präzisierung der Abstandswerte und ggf. eine Ermittlung der Einstrahlwinkel beim Empfänger gesteigert werden; dies gilt gerade für lichtbasierte Informationsübermittlung, die eine Sichtstrecke zwischen Sender und Empfänger erfordern.

Dazu kann vorgesehen sein, beim Empfänger zusätzlich die Richtung des auf den Lichtsensor einfallenden Datensignals zu berücksichtigen, also den Azimutwinkel in Bezug auf eine Bodenebene, sofern der Empfänger eine Antenne oder einen Lichtdetektor besitzt, über die auch die Signalrichtung bestimmbar ist.

In jedem Fall kann aus der Entfernung des Empfängers zum Sender der Elevationswinkel bestimmt werden, wenn entweder alle Sender auf gleicher Höhe im Deckenbereich oberhalb der Empfänger angebracht sind oder die Höhe des Senders über Grund als weiteres Merkmal in der Floormap hinterlegt ist. Sobald eine erste Positionsbestimmung beim Empfänger erfolgreich durchgeführt worden ist, können diese Winkel benutzt werden, um richtungsabhängige Einflüsse auf die Signalstärke, die sich aus Art und Orientierung der Antenne bzw. des Lichtdetektors am Empfänger ergeben, zu kompensieren und darüber den Abstandswert genauer zu ermitteln. Bei Detektoren, die an verfahrbaren Gegenständen wie einem Einkaufswagen fest montiert sind, sind Neigung zur Bodenebene sowie die Ausrichtung zur Längsachse des verfahrbaren Gegenstands bekannt, so dass Azimut und Elevation zwischen Empfänger und Sender bestimmbar sind. Die beiden Winkel sind zwar auch direkt für die mathematische Positionsbestimmung durch Triangulation nutzbar, dienen aber einzeln oder gemeinsam bei dem Verfahren nach der Erfindung in erster Linie dazu, winkelabhängige Einflüsse auf das an der Antenne oder dem Lichtdetektor einfallenden Datensignals zu erfassen und darüber einen möglichst genauen Abstandswert für das empfangene Datensignal zu bestimmen.

Aus der für den jeweiligen Sender bekannten Lichtverteilungskurve und dem Elevationswinkel der Sichtverbindung zwischen Sender und Empfänger wird ein Korrekturwert ermittelt, mit dem die mit dem Sensor gemessene Lichtintensität bei dem empfangenen Signal korrigiert wird, bevor daraus der Abstandswert berechnet wird.

Um den Elevationswinkel berücksichtigen zu können, ist eine Anordnung im Gebäude vorteilhaft, bei der alle Sender auf gleicher Höhe angeordnet sind, wobei ihr optisches Element jeweils so ausgerichtet ist, dass die Mittelachse normal zum Boden ausgerichtet ist. Außerdem

Um im Anwendungsfall der Einkaufswagen in einer Verkaufsstätte die erste Positionsbestimmung zu beschleunigen, kann vorgesehen sein, dass mit dem Einstellen in eine Abstellposition oder beim Herausnehmen daraus die Positionsdaten im Empfänger zurückgesetzt werden, z. B. wenn der Benutzer das Pfandschloss öffnet. An solchen Positionen wird ein Sender genau oberhalb davon an der Decke angebracht. Zur Kalibrierung kann der Empfänger unter den Sender gebracht werden. Der dann gemessene Abstandswert kann mit dem vertikalen Abstand zwischen Sender und Empfänger abgeglichen werden.

Bezüglich der Senderate ist Folgendes zu berücksichtigen:
Die erfindungsgemäß bevorzugte, unidirektionale Übertragung im Infrarotbereich verbindet Sender und Empfänger. Hierbei handelt es sich um eine Art Broadcast, den jeder Sender aussendet, da jeder Empfänger in der Lage ist, alle Adressen zu empfangen und auszuwerten. Da der Broadcast nicht von jedem Sender kontinuierlich gesendet werden kann, wird auf ein Zeitmultiplexverfahren zurückgegriffen. Nach der Erfindung sind die Sender voneinander unabhängig und nicht vernetzt. Die Sender entscheiden selbst wann das nächste Mal gesendet wird. Jeder Sender entscheidet nach individuellem Zufallsprinzip, im vorgegebenen Zeitfenster, um seine Adresse auszusenden. Ein Pseudouzufallsgenerator wird mit der eigenen Adresse initialisiert, dadurch unterscheidet er sich automatisch von anderen Pseudozufallsreihenfolgen. Um den Hauptfehler so gering wie möglich zu halten, sollte eine Positionsaktualisierung mindestens zweimal pro Sekunde erfolgen. Damit bei einem Fehler, durch den ein Datensignal z. B. wegen Überlappung nicht empfangbar ist die Aktualisierungsrate eingehalten werden kann, beträgt die Aktualisierung vorzugsweise wenigstem viermal pro Sekunde erfolgen, d.h. für das System, dass in einer ¼ Sekunde mindestens drei Adressen jeweils einmal ohne Überlagerung übertragen werden müssen. Dabei liegt der optische Empfangsbereich für die meisten Positionen im Empfangsbereich, je nach Anordnung, bei bis zu neun Sendern. Mit diesen Angaben lässt sich das System parametrieren und die Datenlänge, sowie die Wiederholungsrate der Sender optimal aufeinander abstimmen.

Dabei muss die Crashrate berücksichtigt werden, die die Wahrscheinlichkeit beschriebt, wie oft sich Adressen der neun Sender gegenseitig stören. Der zweite Faktor, die Errorrate, charakterisiert den Hauptfehler. Die Errorrate gibt an, wie hoch die Wahrscheinlichkeit ist, dass in dem Intervall von 0,25 s ein Sender nicht erfolgreich übertragen hat. Solange dieser Fehler nicht auftritt, kann eine ausreichend genaue Position berechnet werden.

Eine weitere wichtige Größe ist die der erfolgreichen Übertragungen pro Sender (wins/interval) unter Berücksichtigung der crashrate. Umso höher die wins/interval sind, desto genauer kann die Intensität der Adresse bestimmt werden. Die veränderbaren Parameter sind dabei die Grenzen, in denen ein Sender das nächste Mal sendet.

Sofern nach der Erfindung nur das Minimum an Informationen, nämlich eine sehr kurze digitale Senderkennung ausgestrahlt wird, hängt der Helligkeitswert des Signals von der sehr kurzen Bitfolge ab, die die Senderkennung widerspiegelt. Jede Senderkennung hat daher einen unterschiedlichen mittleren Helligkeitswert. Daher ist im Sendeprotokoll vorzugsweise vorgesehen, wenigstens eine einheitliche Sendefolge mehrerer "ON"-Bits vorzusehen, über welche einzeln oder gemittelt die Intensitätsmessung der Lichtstärke durchgeführt wird.

Der Empfänger bzw. die damit verbundene mobile Einheit kann vollständig autonom gestaltet sein, so dass er auch eine Datenverarbeitungseinrichtung mit einem Speicher umfasst, in welchem die Senderstandorte und ggf. die Korrekturwerte für die Sender hinterlegt sind. Die Position kann also in der mobilen Einheit bestimmt werden, und es können abhängig davon weitere Aktionen vorgesehen sein, die an der mobilen Einheit ausgelöst werden.

Möglich ist weiterhin, dass der Empfänger wenigstens drei Datensätze an eine zentrale Datenverarbeitungseinrichtung übermittelt, wobei jeder Datensatz zumindest eine Senderkennung und einen mit der Signalstärke des empfangenen Signals korrelierten Wert umfasst. Sofern keine Korrekturfaktoren berücksichtigt werden müssen, kann auch gleich der jeweilige Abstandswert beim Empfänger bestimmt und an die zentrale Datenverarbeitungseinrichtung übermittelt werden. Dort wird dann aus den wenigstens drei Datensätzen der Empfängerstandort berechnet. Mit Kenntnis des Empfängerstandorts können von außen Aktionen in Bezug auf die spezifische mobile Einheit durchgeführt werden.

Die Erfindung wird nachfolgend anhand eines Ausführungsbeispiels und mit Bezug auf die Zeichnungen näher erläutert. Die Figuren zeigen im Einzelnen:
- Fig. 1: schematische Konfiguration zur Durchführung des Verfahrens;
- Fig. 2: ein Schema zur Positionsbestimmung durch Trilateration;
- Fig. 3: ein Flussidagramm zur Darstellung des Verfahrensablaufs;
- Fig. 4: schematische Darstellung der Elevationswinkels; und
- Fig. 5: Lichtverteilungskurven für ein Sender-Empfängersystem;
- Fig. 6: die relative Lichtintensität in Abhängigkeit vom Abstand zum Sender.

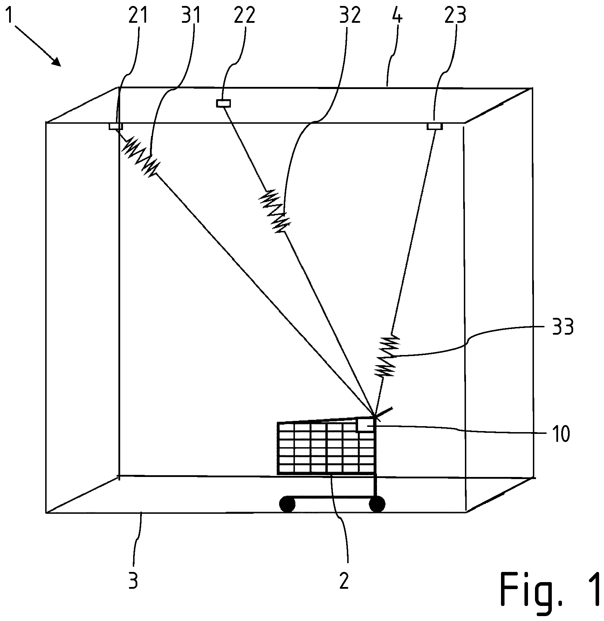

Figur 1 zeigt eine schematische Konfiguration, in der das erfindungsgemäße Verfahren durchgeführt werden kann. Auf einem Boden 3 eines Gebäudes 1 wird ein Einkaufswagen 2 verschoben, der einen Empfänger 10 besitzt. An einer Gebäudedecke 4 sind drei Sender 21, 22, 23 angebracht. Jeder Sender 21, 22, 23 sendet mit einer zufälligen Wiederholrate ein Signal 31, 32, 33 in Form eines Infrarotlichtsignals, das ein Datentelegramm enthält. Die Signal 31, 32, 33 werden vom Empfänger 10 aufgenommen, wobei zugleich die Stärke des Signals am Empfänger 10 gemessen wird. Inhalt und Stärke jedes empfangenen Signals werden im Empfänger 10 zwischengespeichert.

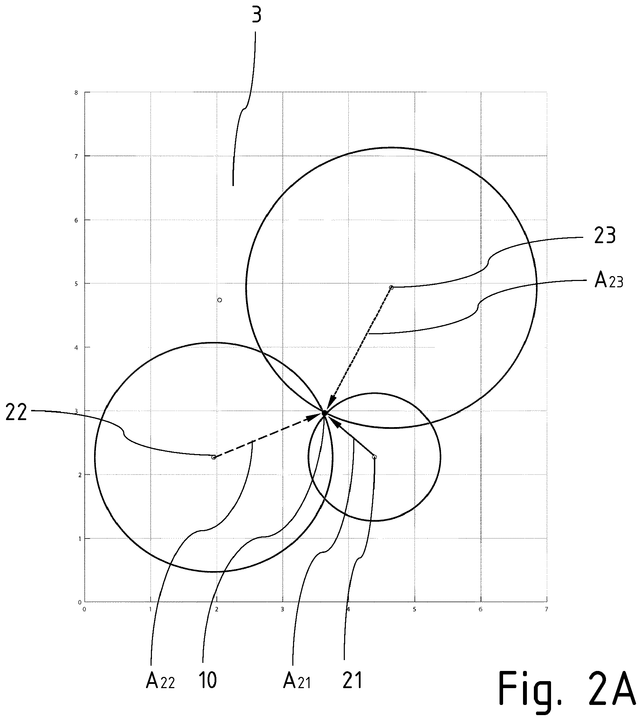

Figur 2A zeigt ein Koordinatensystem, das sich auf den Grundriss des Gebäudes bezieht. Die absolute Position der Sender 21, 22, 23 in dem Koordinatensystem ist bekannt. Anhand des Inhalts des empfangenen Datentelegramms kann am Empfänger auf die Position desjenigen Senders geschlossen werden, von dem das Signal empfangen wurde. Dazu ist entweder die absolute Position der Sender in einem Speicher am Empfänger hinterlegt, so dass durch eine empfangene Senderkennung die absolute Position abgerufen werden kann. Alternativ werden zwei Koordinatenwerte übertragen, die für eine relative Position des Senders in Bezug auf ein ortsfestes Raster oder ein sonstiges Koordinatensystem stehen, so dass anhand dessen im Empfänger die absolute Position berechnet werden kann.

Der zweite zur Positionsbestimmung notwendige Parameter wird durch die Abstandswerte A₂₁, A₂₂, A₂₃ gebildet, welche aus den beim Signalempfang gemessenen Signalstärken gewonnen wurden. Setzt man die Abstandswerte A₂₁, A₂₂, A₂₃ jeweils als Radius mit dem bekannten Senderstandort als Mittelpunkt, ergibt sich theoretisch der Standort des Empfängers 10 als Schnittpunkt von drei Kreislinien.

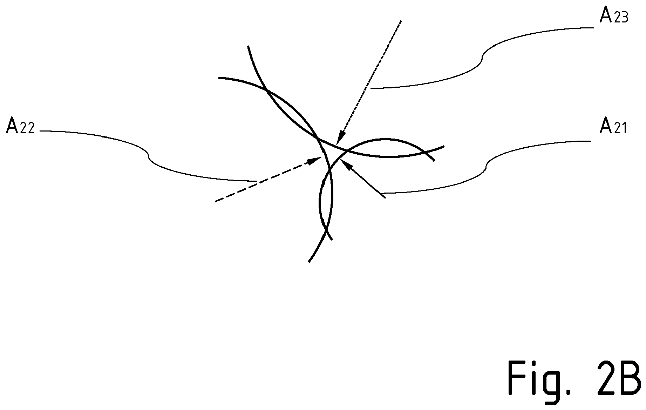

Wie Figur 2B dargestellt, sind die Abstandswerte jedoch in der Praxis nicht hinreichend genau, so dass sich nicht nur genau ein gemeinsamer Schnittpunkt aller Kreislinien bildet, sondern sich ein Fehlerdreieck ergibt. Die Position des Schwerpunkts des Fehlerdreiecks im Koordinatensystem wird als Standort des Empfängers angenommen.

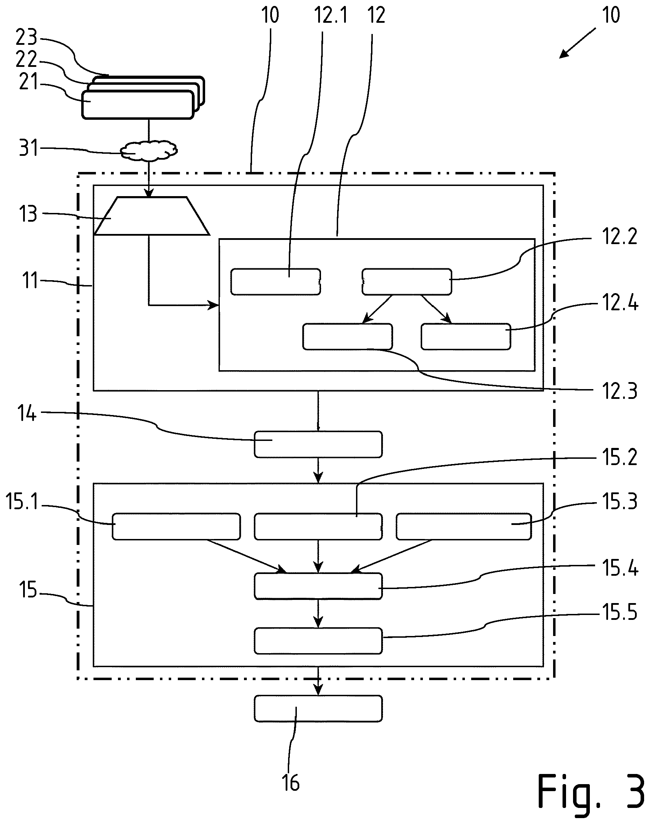

Figur 3 zeigt in einem Flussdiagramm die Durchführung des Verfahrens nach einer Ausführungsform, bei der die Positionsbestimmung direkt beim Empfänger stattfindet.

Die Sender 21, 22, 23 senden jeweils ein individuelles Signal 31, 32, 33, das ein kurzes Datentelegramm enthält. Eine Empfangseinrichtung 11 im Empfänger 10 besitzt eine Fotodiode 13, über die die Signale 31, 32, 33 aufgenommen werden. Sie werden in einer Auswertungseinrichtung 12 verarbeitet, die folgenden Elemente enthält:
- eine Demodulationseinheit 12.1 und
- eine Signalanalyseeinheit 12.2 mit einem Modul 12.3 zur Bestimmung der Signalstärke und einem Modul 12.4 zur Bestimmung der Senderkennung aus dem empfangenen Datentelegramm.

Die ermittelten Werte für die Signalstärke und die Senderkennung werden über eine Schnittstelle 14 an eine Positionsbestimmungseinheit 15 übergeben, die ebenfalls Teil des Empfängers 10 ist. Diese dient vorrangig dazu, die Entfernung zum Sender zu bestimmen. Dazu sind hinterlegt:
- Die Eigenschaften der Infrarot-LED des jeweiligen Senders in Form eines Senderkorrekturwerts an einem Speicherplatz 15.1;
- Die Eigenschaften der Fotodiode 13 in Form eines Empfängerkorrekturwerts an einem Speicherplatz 15.2;
- Die Berechnungsvorschriften nach dem Licht-Abstand-Gesetz an einem Speicherplatz 15.3;

Durch die hinterlegten Korrekturwerte und Berechnungsvorschriften kann die in der Empfangseinrichtung 11 ermittelte Signalstärke zu einem Abstandswert umgerechnet werden, der den Abstand des Empfängers 10 zu dem jeweiligen Sender im Moment der Sendung angibt.

In einer Trilaterationseinheit 15.5 wird aus den Senderpositionen und den Abstandswerten von wenigstens drei empfangenen Signalen mit auswertbaren Datentelegrammen der momentane Empfängerstandort berechnet und als Positionsdaten 16 ausgegeben. Diese können z. B. mittels einer am Einkaufswagen vorhandenen Anzeigeeinheit visualisiert werden.

Mit dem Abstand des Empfängers vom Sender ändert sich nicht nur die Strecke, die das Licht zurücklegt, sondern auch der Winkel des einfallenden Lichts, sondern auch. Zur Erhöhung der Genauigkeit bei der Berechnung und Bestimmung des Standorts kann vorgesehen sein, die Berechnung des Abstands nicht allein anhand der gemessenen Lichtintensität vorzunehmen, sondern die Lichtverteilungskurve des Senders und des Empfängers mit zu berücksichtigen.

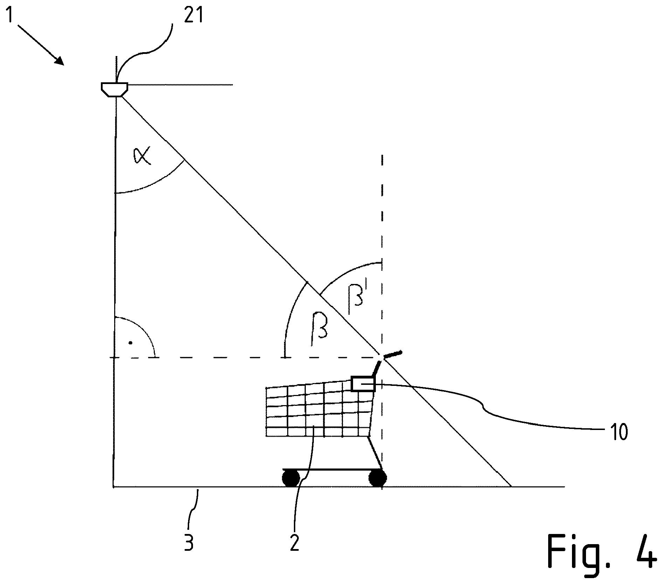

Voraussetzung dafür ist die parallele Anordnung von Sender und Empfänger zueinander. In Fig. 4 ist noch einmal die Situation eines Einkaufswagens 2 in einem Gebäude 1 dargestellt. Der Lichtsensor am Empfänger 10 ist parallel zum Boden 3 und nach oben ausgerichtet. Der Sender 21 an der Decke ist mit seiner Mittelachse senkrecht zum Boden 3 ausgerichtet. Dadurch ergibt sich ein Abstrahlwinkel α. Beim Empfänger ergibt sich ein Elevationswinkel β. Die Winkel α und β ergänzen sich zu 90°, hängen also direkt zusammen und sind gleichwertig in dem Sinne, dass der winkelabhängige Einfluss auf die Lichtintensität entweder auf α oder β bezogen werden kann. Vorzugsweise werden α und der gleich große Winkel β' ausgewählt.

Um einen winkelabhängigen Korrekturfaktor bilden zu können, müssen die Lichtverteilungskurven von Sender und Empfänger vorliegen oder bestimmt werden, z. B. von einer LED als Sender und einer geeigneten Fotodiode als Lichtsensor am Empfänger.

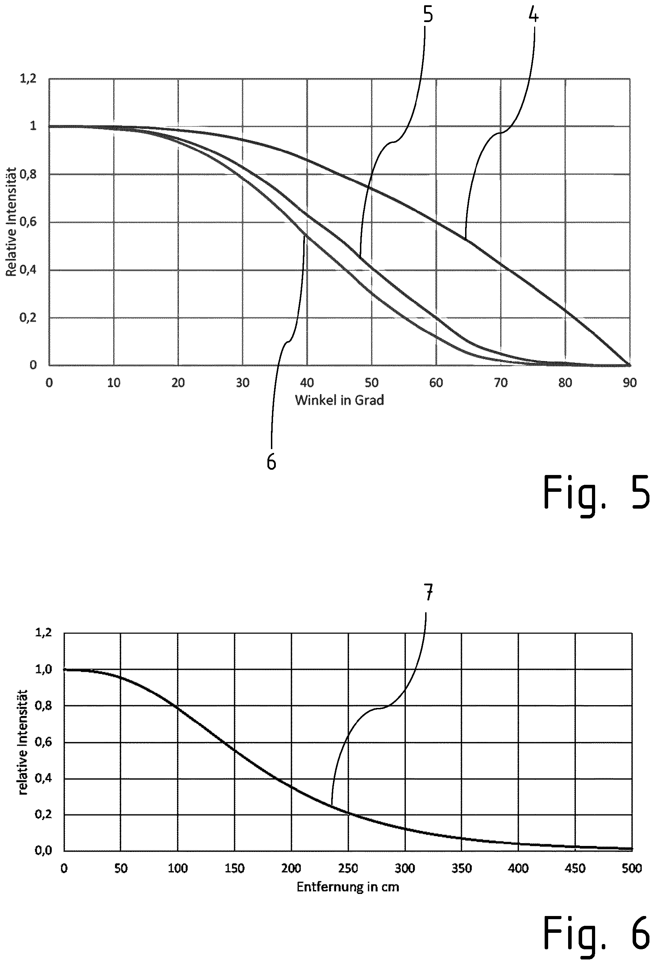

Figur 5 zeigt drei Lichtverteilungskurven, wobei eine normierte Lichtintensität über dem Abstrahlwinkel werden α = β'. Die Kurve 4 gibt die Lichtverteilung der Fotodiode wieder. Kurve 5 zeigt die Lichtverteilung der als Sender genutzten LED. Die Kombination von Sender und Empfänger führt zur Kurve 6, die das Gesamtsystem repräsentiert.

Die Kurve 6 weist keine kontinuierliche Steigung auf. Besonders im nahen und im weit entfernten Bereich vom Mittelpunkt ist der Kurvenverlauf sehr gerade und ohne große Steigung. Dies bedeutet, dass nur sehr wenig Helligkeitsunterschied zwischen den einzelnen Winkeln liegt. Folglich können hier schneller Fehler auftreten. Wie bereits erwähnt, muss auch das Abstandsgesetz berücksichtigt werden. Das Abstandsgesetz beschreibt das Verhalten der Lichtintensität in Abhängigkeit der Entfernung zur Quelle. Betrachtet man eine beleuchtete Fläche eines Raumwinkelelements, so wird die Fläche quadratisch größer, wenn man den Abstand zur Quelle verdoppelt.

Da die Lichtquelle bei doppelter Entfernung eine quadratisch größere Fläche beleuchten muss, liegt es nahe, dass die Lichtintensität auf der Fläche quadratisch abnehmen muss. Der Kurvenverlauf der Überlagerung muss somit um den quadratischen Zusammenhang erweitert werden, sodass in Abhängigkeit des Winkels auch die Hypotenuse berechnet werden muss. Daher muss vorab der Höhenunterschied zwischen Sender und Empfänger bekannt sein, da die Berechnung von diesem Abstand abhängig ist.

Der Kurvenverlauf einer Kurve 7 in Figur 6 zeigt die aus der Lichtverteilungskurve und den beschriebenen mathematischen Beziehungen abgeleitete relative Intensität in Abhängigkeit vom Abstand zum Mittelpunkt des Senders. Diese gilt für eine in dem installierten System gegebene, konstante Höhendifferenz zwischen Sender und Empfänger. Die am Lichtsensor des Empfängers gemessene Lichtintensität wird dann mit einem Korrekturfaktor bewertet, der der relativen, winkelabhängigen Lichtintensität entspricht.

## Patentansprüche

1. Verfahren zur Positionsbestimmung eines mobilen Empfängers (10) innerhalb eines Gebäudes (1) oder einer ortsfesten Einrichtung, in dem bzw. der wenigstens eine Gruppe mit mehreren Sendern (21, 22, 23) verteilt angeordnet ist, welche jeweils eine feste Position in einem ortsfesten Koordinatensystem besitzen, wobei:
- die Sender (21, 22, 23) jeweils ein Signal (31, 32, 33) ausstrahlen, und
- der Empfänger (10) eine Empfangseinheit mit wenigstens einem optischen Sensor besitzt und mit einer Auswertungseinheit zur Auswertung des Inhalts und der Signalstärke eines empfangenen Signals (31, 32, 33) verbunden ist;
- die Sender (21, 22, 23) ohne Koordination untereinander jeweils ein optisches Signal (31, 32, 33) mit einer individuellen Senderkennung abstrahlen,
- in einem Speicher die Positionsdaten der Sender (21, 22, 23) der Gruppe hinterlegt sind;
- im Empfänger (10) für jedes empfangene Signal (31, 32, 33) jeweils der abstrahlende Sender (21, 22, 23) ermittelt und dessen Positionsdaten aus dem Speicher abgerufen werden und dass aus der Signalstärke des Signals (31, 32, 33) ein Abstandswert für den Abstand zwischen dem Empfänger (10) und dem abstrahlenden Sender (21, 22, 23) ermittelt wird,
- aus den Positionsdaten und den Abstandswerten von mehreren Signalen (31, 32, 33), die von unterschiedlichen Sendern (21, 22, 23) abgestrahlt werden, mittels eines Tri- oder Multilaterationsverfahrens die Position des Empfängers (10) innerhalb des Gebäudes (31, 32, 33) oder der Einrichtung berechnet wird
**dadurch gekennzeichnet, dass**
- dass die Signalstärken für die Abstrahlung des Signals (31, 32, 33) bei allen Sendern (21, 22, 23) der Gruppe normiert sind oder dass die individuelle Signalstärke jedes Senders (21, 22, 23) zusätzlich zu seinen Positionsdaten in dem Speicher hinterlegt ist und
- dass die Abstrahlung der Signale (31, 32, 33) bei jedem Sender (21, 22, 23) mit einer individuellen und nicht extern koordinierten Wiederholrate erfolgt, die bei den Sendern (21, 22, 23) innerhalb der Gruppe unterschiedlich ist und/oder die bei den Sendern (21, 22, 23) vor jeder Ausstrahlung zufällig bestimmt wird.

2. Verfahren nach Anspruch 1, **dadurch gekennzeichnet, dass** die Sender (21, 22, 23) als Signal (31, 32, 33) wenigstens eine Senderkennungsnummer ausstrahlen und dass in dem Speicher des Empfängers (10) die absoluten Positionsdaten jedes über die Senderkennungsnummer zu identifizierenden Senders der Gruppe in Bezug auf ein ortsfestes Koordinatensystem hinterlegt sind.

3. Verfahren nach Anspruch 1 oder 2, **dadurch gekennzeichnet, dass** die Sender (21, 22, 23) ein Signal (31, 32, 33) ausstrahlen, das relative Positionsdaten des jeweiligen Senders in Bezug auf ein ortsfestes Raster umfasst, und dass mittels der relativen Positionsdaten und gespeicherten Werten zum Aufbau des Rasters in dem Empfänger (10) die absoluten Positionsdaten des jeweiligen Senders in Bezug auf ein ortsfestes Koordinatensystem bestimmt werden.

4. Verfahren nach einem der vorhergehenden Ansprüche, **dadurch gekennzeichnet, dass** die Sender (21, 22, 23) ein Infrarot- oder Near-Infrared-Signal ausstrahlen.

5. Verfahren nach einem der vorhergehenden Ansprüche, **dadurch gekennzeichnet, dass** die Senderkennung eine digitale Ganzzahl mit einer Länge von 8 bis 16 Bit ist.

6. Verfahren nach Anspruch 5, **dadurch gekennzeichnet, dass** die digitale Senderkennung mit wenigstens einer Zusatzsendefolge von mehreren zusammenhängenden "ON"-Bits ergänzt wird, wobei die Intensitätsmessung der Lichtstärke anhand der empfangenen Zusatzsendefolge durchgeführt wird.

7. Verfahren nach Anspruch 6, **dadurch gekennzeichnet, dass** die Intensitätsmessung der Lichtstärke anhand eines Mittelwerts der empfangenen "ON"-Bits der Zusatzsendefolge durchgeführt wird.

8. Verfahren nach einem der vorhergehenden Ansprüche 5 bis 7, **dadurch gekennzeichnet, dass** die Datenübertragung bei der Senderkennung durch Frequenzmodulation erfolgt.

9. Verfahren nach einem der vorhergehenden Ansprüche 5 bis 8, **dadurch gekennzeichnet, dass** die Senderkennung in einem Broadcastverfahren von jedem Sender (21, 22, 23) wiederholt ausgesendet wird, wobei die Sender (21, 22, 23) unabhängig voneinander mit senden und nicht untereinander vernetzt sind.

10. Verfahren nach Anspruch 9, **dadurch gekennzeichnet, dass** die Wiederholrate für das Aussenden der Senderkennung mittels eines Zeitmultiplexverfahrens an jedem Sender (21, 22, 23) gesondert berechnet wird, wobei bei jedem Sender (21, 22, 23) der Zeitpunkt der nächstfolgenden Sendung der Senderkennung zufällig bestimmt wird, indem ein Zufallsgenerator mit der eigenen Senderkennung initialisiert wird.

11. Verfahren nach einem der vorhergehenden Ansprüche, **dadurch gekennzeichnet, dass** alle Sender (21, 22, 23) im Gebäude auf der gleichen Höhe über dem Boden angeordnet sind und dass der Abstrahlwinkel aller Sender (21, 22, 23) jeweils senkrecht zum Boden des Gebäudes (1) ausgerichtet ist.

12. Verfahren nach Anspruch 11, **dadurch gekennzeichnet, dass** die Signalstärke des empfangenen Signals (31, 32, 33) anhand eines Korrekturfaktors korrigiert wird, welcher anhand einer für den Sender (21, 22, 23) individuell bestimmten Lichtverteilungskurve (LVK) und dem Elevationswinkel zwischen dem Sender (21, 22, 23) von dem das empfangene Signal stammt (31, 32, 33) und dem Sensor am Empfänger bestimmt wird.
